(19) Europäisches Patentamt
European Patent Office
Office européen des brevets

(11) **EP 3 626 488 B1**

(12) **EUROPEAN PATENT SPECIFICATION**

(45) Date of publication and mention
of the grant of the patent:
**11.05.2022 Bulletin 2022/19**

(21) Application number: **18195821.6**

(22) Date of filing: **20.09.2018**

(51) International Patent Classification (IPC):
**B60H 1/00** *(2006.01)*   **B60H 1/32** *(2006.01)*

(52) Cooperative Patent Classification (CPC):
**B60H 1/00428; B60H 1/3222; B60H 1/3232;**
B60H 2001/3273; Y02T 10/88

(54) **A METHOD FOR CONTROLLING THE VOLTAGE OUTPUT OF A POWER DISTRIBUTION SYSTEM FOR A TRANSPORT CONDITIONING UNIT**

VERFAHREN ZUR STEUERUNG DER AUSGANGSSPANNUNG EINES ENERGIEVERTEILUNGSSYSTEMS FÜR EINE TRANSPORTKONDITIONIERUNGSEINHEIT

PROCÉDÉ DE COMMANDE DE LA TENSION DE SORTIE D'UN SYSTÈME DE DISTRIBUTION D'ÉNERGIE POUR UNE UNITÉ DE CONDITIONNEMENT DE TRANSPORT

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**25.03.2020 Bulletin 2020/13**

(60) Divisional application:
**22163135.1**

(73) Proprietor: **Zanotti S.p.A.**
**46020 Pegognaga (IT)**

(72) Inventors:
• **SFRAGARA, Massimiliano**
**46020 PEGOGNAGA (IT)**
• **VENTURINI, Luca**
**46020 PEGOGNAGA (IT)**
• **GUALTIERI, Stefano**
**46020 PEGOGNAGA (IT)**

(74) Representative: **Porta & Consulenti Associati S.p.A.**
**Via Vittoria Colonna, 4**
**20149 Milano (IT)**

(56) References cited:
WO-A1-2018/009798   WO-A2-2017/218910
WO-A2-2018/136738   US-A- 5 086 266
US-A- 5 629 568

## Description

## Technical field

The present invention relates to a transport conditioning system including a conditioning unit for controlling the temperature within an inner space of a cargo storage compartment mounted on a transport vehicle. In particular, the present invention concerns a method for controlling the voltage output of a power distribution system for powering a plurality of electrical loads of a transport conditioning unit.

## Background art

Transport vehicles such as trucks, vans and (semi-)trailers can be used for carrying cargo that need to be maintained at a controlled temperature, in particular perishable items such as fresh or frozen food or cut flowers, in order to avoid deterioration during transportation. Such vehicles comprise a thermally isolated storage compartment that is maintained at a predetermined temperature different (lower or higher) than the external ambient conditions by a transport conditioning system mounted on the vehicle and operatively associated with the inner space of the storage compartment. Even though the temperature-controlled storage compartment can be set or maintained at a temperature higher than the external ambient temperature, for example in cold climates, these vehicles are generally referred to as refrigerated transport vehicles.

Typically, transport conditioning systems comprise a conditioning unit comprising a compressor, an air-cooled condenser, one or more fans, a filter-drier or evaporator and a plurality of connecting conduits to form a closed loop refrigerant circuit. In the compressor, a refrigerant gas is compressed to a higher temperature and pressure. The compressed gas then moves to the air-cooled condenser where air flowing across condenser coil fins cools the gas flowing in tubes. By removing latent heat, the gas condenses to a high pressure/low temperature liquid, which then flows toward an expansion valve and an evaporator positioned at the storage compartment. Upstream the expansion valve, a filter-drier may be placed in the refrigerant circuit for keeping the refrigerant clean and dry. As the condensed liquid passes through the expansion valve, some of it vaporizes into a gas and flows in the evaporator. Air from the cargo box flows over the evaporator and the remaining condensed liquid absorbs heat from the flowing air and is vaporized. Evaporator fans energize the air flowing over the evaporator and introduce the conditioned air into the inner space of the storage compartment.

Diesel engines used as prime movers on transport refrigeration systems may have two operating speeds, that is a high speed, such as 2200 rpm, and a low speed, such as 1400 rpm. In operation, the diesel engine is operated at high speed during temperature pulldown and at low speed during the temperature maintenance mode. During standstill, the diesel engine is typically idling at low speed. The diesel engine is generally designed to meet the power needs during operation at maximum capacity with efficient fuel consumption. Therefore, during the temperature maintenance mode and standstill mode, the diesel engine is operating at lower efficiency and with increased fuel consumption. US 2014/0026599 describes a method for operating a refrigeration system having a refrigeration unit for providing temperature conditioned air to a temperature controlled space, an engine and an electric generation device, the method comprising: providing a battery system having a least one battery unit supplying electric power; during a high cooling demand mode, operating the engine to drive the electric generation device for supplying electric power and simultaneously employing the battery system for supplying electric power to jointly power the plurality of power demand loads of the refrigerant unit. The document states that in this way the engine can be used less, thereby saving fuel and reducing emissions.

Transport refrigeration units generally employ an internal combustion engine and a generator to produce electrical power, typically AC power, to drive the compressor and fans. Existing sources of AC power produce unregulated AC power that can vary in voltage and frequency. US 2016/0311294 remarks that, when the need arises to power auxiliary devices, the AC power from the generator often cannot be used due to its unregulated nature. The patent publication concerns a transport refrigeration unit including a source of unregulated AC power; a compressor; a power conditioning module to convert the unregulated AC power to regulated power; and a switch having a first position to connect the source of unregulated AC power to the compressor and a second position to connect the source of unregulated AC power to the power conditioning module. A power conditioning module can be an AC/DC converter connected to one or more DC power connections, to which an operator can connect a DC load, such as soft drinks pumps or lift gate.

EP 1046543 A2 discloses a transport refrigeration unit comprising a structural support framework configured to be attached to the front wall of the transport trailer, and the following components, all supported by the framework: a compressor having an electric drive motor for running the compressor; a condenser heat exchanger unit operatively coupled to said compressor discharge port; an evaporator heat exchanger unit operatively coupled to said compressor; at least one fan assembly having fan motors; and an integrally mounted unitary engine driven generator assembly configured to selectively produce at least one AC voltage at one or more frequencies, wherein said generator assembly is configured to produce sufficient electric power to operate said compressor drive motor and the fan motors. In the described embodiments, the generator is a permanent magnet synchronous generator configured to have an output frequency of 65 Hz at an engine speed of 1950 rpm. and an output frequency of 45 Hz at an engine speed of 1350 rpm. All of the evaporator and condenser fan motors and compressor drive motor are selected such that they operate at the synchronous generator output frequencies and voltages.

US 5,629,568 relates to a drive unit for an internal combustion engine and a machine, which may include cooling installations, wherein the engine is able to rotate at an rpm and including an rpm actuator for controlling the rpm of the engine.

## Summary of the invention

During a daily operating cycle, a refrigerated vehicle requires a widely variable capacity depending on several factors. For example, a high power generating capacity is necessary during temperature pulldown inside the compartment, frequent door openings and in the presence of high ambient temperatures, whereas a significantly smaller capacity is requested at low ambient temperatures, with few door openings and when the temperature in the compartment is near the programmed setpoint.

In order to reduce capacity and consequently fuel consumption, a low engine speed for powering the generator may be used. According to the system described in EP 1046543, this would however result in a voltage output unsuitable for powering the electrical loads such as compressor and fans.

Recently, restrictions or even bans for diesel vehicles in city centres have been introduced to tackle air pollution and noise. Such regulations may extend to idling vehicles with running motors and impose the switching off of the diesel engines. Therefore, during standstill, for example when the cargo is unloaded from the vehicle, or while the refrigerated vehicle travels in a restricted area, it would be necessary or at least desirable to operate the refrigeration unit with the engine off.

Renewable energy sources to power the refrigeration unit, such as solar panels or wind turbines, which can be installed on the vehicle, would be advantageous as an auxiliary source for either directly powering the refrigeration unit or for storage of electric energy in batteries. However, the Applicant has noted that solar panels supply a variable DC voltage, which is generally unsuitable for powering the electrical loads.

The Applicant has recognised that provision of an AC-DC voltage converter coupled to an AC electric generator and of a high voltage DC power distribution bus electrically connected to the AC-DC voltage converter provides for a powering of the electrical loads which is largely independent of the technical specifications of the power supplies used for the loads in the transport conditioning unit.

The Applicant has also realised that a DC high-voltage source created downstream the AC electric generator and configured to distribute power to at least one of the electrical loads of the conditioning unit allows the use of other power sources in addition to or instead of the electric generator.

The present disclosure relates to a transport conditioning system comprising:

- a transport conditioning unit for controlling the temperature within an inner space of a cargo storage compartment mounted on a transport vehicle, the transport conditioning unit comprising a compressor, a condenser and a condenser fan associated with the condenser for providing air flow thereover, an evaporator, an evaporator fan associated with the evaporator for providing air flow thereover, and a plurality of electricals loads comprising an electric compressor motor for driving the compressor and a first electric fan motor for driving the condenser fan,

- an electric AC generator driven by an internal combustion engine, and

- an electric power distribution assembly for powering at least one electrical load of the plurality of electrical loads, the assembly comprising

    an AC-DC voltage converter electrically coupled as input to the electric AC generator for receiving AC power and configured to convert the AC power to DC power so as to supply DC voltage as output, and

    a DC power distribution bus electrically coupled as input to the AC-DC voltage converter and configured to carry the DC voltage,

wherein the least one electric load is powered by the DC power distribution bus, said least one electric load being the compressor motor.

In a typical configuration, the compressor has a flow inlet and a flow outlet, the condenser is operatively coupled to the flow outlet of the compressor and the evaporator is operatively coupled to the flow inlet of the compressor and to a flow outlet of the condenser.

Preferably, the power distribution assembly comprises only a single DC power distribution bus electrically coupled to the AC-DC voltage converter.

The AC-DC voltage converter is designed to output a high DC voltage, preferably of from DC 400V to DC 800V, more preferably of from 500V to 700V.

Preferably, the electric AC generator is a synchronous generator designed to output a three-phase voltage to be received by the AC-DC voltage converter, the three-phase output voltage being preferably comprised between AC 280V and AC 550V.

The Applicant has observed that especially when a high-voltage power supply is provided as a DC power to the electrical loads of the conditioning unit, voltage stability is particularly desired.

Preferably, the power AC-DC converter is configured to output a substantially constant output DC voltage while accepting a relatively wide range of input AC voltage values. A suitable voltage value or average value within a controlled range of values can be selected depending on the overall load of the conditioning unit.

Preferably, the AC-DC voltage converter is a full bridge converter, more preferably a three-phase full bridge converter.

In the present description and claims and according to some preferred embodiments, with a substantially constant DC voltage is meant the converter voltage values output lies within a range of tolerance of values, which ensures, for a given specific configuration of the electrical loads and power sources, a desired voltage stability. Generally speaking, the voltage stability in the DC power distribution bus mainly depends on the balance between the power absorbed by the electrical loads and the power generated by the sources.

In a preferred embodiment, the output DC voltage is a substantially constant value of from DC 580 V to 620 V about the midpoint voltage of DC 600 V. In a preferred embodiment, the DC voltage output is of 580V resulting from the rectification a standard three-phase 400V AC voltage.

Within the present description and claims, the electrical components which need to be powered for operation, in particular those of the conditioning unit such as the compressor motor and the fan motor(s), are collectively indicated as electrical loads.

Preferably, each of the plurality of electrical loads is powered by the DC power distribution bus, the compressor motor and the first electric fan motor being electrically coupled to the power distribution bus.

Preferably, each electrical load of the plurality of electrical loads is electrically coupled in parallel to the common DC power distribution bus.

The nature of the electrical loads of the conditioning unit can vary, and may for instance comprise alternating current (AC) motors and/or comprise of DC motors operating at a different DC voltage from that running in the high-voltage distribution bus. One or more electrical loads may be connected to the DC power distribution bus through a voltage conversion device, in the description and claims generally indicated as load voltage conversion device, which takes the current running on high voltage in the DC distribution bus as input and generates a suitable specific output AC or DC voltage required by the relevant electrical load.

Preferably, the electric power distribution assembly comprises a first load voltage conversion device electrically coupled as input to the DC power distribution bus and delivering voltage to an electrical load of the plurality of electrical loads, said electrical load being electrically coupled to the DC power distribution bus via the first load voltage conversion device.

Preferably, the first load voltage conversion device is a DC-AC inverter electrically coupled as input to the DC power distribution bus and as output to the compressor motor and being configured to convert the DC voltage received from the DC power distribution bus into a AC voltage to be supplied to the compressor motor.

Preferably, the electric power distribution assembly comprises a second load voltage conversion device, the second load voltage conversion device being a DC-DC voltage converter electrically coupled as input to the DC power distribution bus and as output to the first fan motor, the DC-DC voltage converter configured to convert the DC voltage received from the DC power distribution bus into a different DC voltage to be supplied to the first fan motor.

Preferably, the converted DC voltage output from the DC-DC voltage converter is of from 10 V to 150 V.

Preferably, the plurality of electrical loads comprises a second electric fan motor for driving the evaporator fan, the second electric fan motor being powered by the DC power distribution bus. The second electric fan motor is electrically coupled to the DC power distribution bus.

Preferably, a load voltage conversion device is electrically coupled as input to the power distribution bus and as output to the second electric fan motor, to convert the DC voltage received from the DC power distribution bus into a different DC voltage to be supplied to the second electric fan motor.

The first load voltage conversion device may be a multi-output DC-DC voltage comprising an input DC voltage terminal and a plurality of output DC voltage terminals, wherein the input DC voltage terminal is electrically coupled to the power distribution bus and a first output terminal of the plurality of output DC voltage terminals is electrically coupled to the first electric fan motor and a second output terminal is electrically coupled to the second fan motor.

Preferably, the load power conversion devices are connected individually to the DC distribution bus.

Preferably, the transport conditioning unit and, preferably, the transport conditioning system, is configured to be powered by shore power, for example at AC 400V 50Hz voltage, according to the "standard" used in Western Europe. The unity grid AC power can be fed into the AC-DC voltage converter to transform the input AC voltage into a high DC voltage then distributed to the electrical loads by means of the DC power distribution bus.

Preferably, the electric AC generator comprises output AC terminals and the electric AC-DC voltage converter comprises first input terminals electrically connected to the output AC terminals and second input terminals connectable to a utility power grid supplying AC voltage.

The Applicant has noted that, although the AC-DC converter is preferably designed to provide a substantially constant DC voltage output across a range of AC amplitude and frequency values, in some circumstances, for example due to an unbalance to power generated by the engine-driven generator and power requested by the loads, the pre-set midpoint voltage value may have the tendency to be unstable during operation. Preferably, an electronic automatic control of the DC voltage output from the energy chain is implemented to ensure stable operation of the power distribution system about a desired mean voltage value.

The present invention relates to a method for controlling the voltage output of a power distribution system for powering a plurality of electrical loads of a transport conditioning unit according to claim 1. The transport conditioning unit comprises an internal combustion engine, an electric AC generator driven by the internal combustion engine, a compressor, a condenser, and a condenser fan associated with the condenser for providing air flow thereover, and a plurality of electrical loads comprising an electric compressor motor for driving the compressor and a first electric fan motor for driving the condenser fan, and

a power distribution system comprising an AC-DC voltage converter electrically coupled as input to the AC generator and as a output to a DC power distribution bus configured to carry DC voltage, the DC power distribution bus being electrically coupled to at least one of the plurality of electrical loads,

the method comprising:

a) measuring an instantaneous DC voltage value, $V_{DC}(t)$, and an instantaneous direct current value, $I_{DC}(t)$, at the output of the AC-DC voltage converter;

b) computing an instantaneous DC power value, $P_{DC}(t)$, based on the measured values $I_{DC}(t)$ and $V_{DC}(t)$;

c) determining an engine horsepower value, $P_m^t$, of the internal combustion engine, the horsepower value, $P_m^t$, being associated with the instantaneous DC power value;

d) computing a nominal running speed value of the internal combustion engine corresponding to the engine horsepower value, $P_m^t$, based on an equation or on a lookup table describing a numerical relationship between engine horsepower values and running speed values associated with the internal combustion engine; and

e) running the engine at the nominal running speed value.

Typically, the running speed of the engine is represented by a RPM value.

Preferably, determining an engine horsepower value, $P_m^t$, comprises computing the $P_m^t$ value by converting the instantaneous value $P_{DC}(t)$ into an engine horsepower value, $P_m^t$, by means of a conversion factor associated with an energy conversion efficiency. In another embodiment, determining the $P_m^t$ value comprises performing a read of a lookup table describing a numerical relationship between engine horsepower of the engine and electrical DC power output from the AC-DC converter.

Preferably, the method further comprises repeating steps a) to e).

The Applicant has observed that being the power distribution system able to accept a relatively wide range of input AC voltages and frequencies, it would be advantageous to operate the engine at relatively low fuel consumption while satisfying the power demand of the electrical loads. The Applicant has understood that it is possible, for a given power supply to the electrical loads to select an operating point of the internal combustion engine that has a reduced or the least fuel consumption.

Preferably, the method comprises:

- storing a lookup table implementing a plurality of data tables, each data table describing a numerical relationship between engine horsepower values and running speed values at a constant value of fuel consumption, each data table being associated with a value of fuel consumption so as a respective plurality of values of fuel consumption is associated with the plurality of data tables,

wherein step e) comprises computing a respective running speed value corresponding to the engine horsepower value $P_m^t$ from each data table of the lookup table and selecting a running speed value from the data table having the lowest value of fuel consumption of the plurality of fuel consumption values, the selected running speed value being the nominal running speed value.

Preferably, the internal combustion engine is provided with an engine intake throttle and the method comprises:

- determining an instantaneous running speed value of the engine,

wherein step e) comprises, after computing a nominal running speed value:

- comparing the instantaneous running speed value with the nominal running speed value,
- if a difference between the nominal running speed value and the instantaneous running speed value larger than a pre-set running speed difference value, adjusting the throttle position to the nominal running value so as to run the engine at that speed value, and
- if the difference between the nominal running speed value and the instantaneous running speed value is zero or within the pre-set running speed difference value, taking no action so as to maintain the running speed to the nominal running speed value.

Preferably, the instantaneous running speed is determined from a measurement simultaneous to the measurements of $V_{DC}(t)$ and $I_{DC}(t)$.

The disclosed solution allows multiple and/or different power sources having different electrical output characteristics to be connected to the electrical loads.

Such high voltage bus provides wide flexibility in the power flow. For example, in road mode, electric power can flow from the photovoltaic panels to the compressor and fan motors to harvest renewable energy. If the solar energy is not enough to power the electric loads of the conditioning unit, additional power can flow into the DC distribution bus from the generator set. On the other hand, if there is an excess of solar power, such excess quota can flow towards the batteries to recharge them.

During standstill of the vehicle, such as when the vehicle is in parking mode, power originating from the utility grid can be provided to the compressor motor and fan motors, and preferably also to electric heaters for operation of the conditioning unit and/or to recharge the batteries of the transport conditioning system, such as the starting battery of the internal combustion engine or the battery accumulating energy from photovoltaic module.

## Brief description of the drawings

The present invention will be now described more in detail hereinafter with reference to the accompanying drawings, in which some, but not all embodiments of the invention are shown.

For the purpose of the present description and of the appended claims, use of the "a" or "an" are employed to describe elements and components of the invention. This is done merely for convenience and to give a general sense of the invention. This description should be read to include one or at least one and the singular also includes the plural unless it is obvious that it is meant otherwise.

For the purpose of the present description and of the appended claims, except where otherwise indicated, all numbers expressing amounts, quantities, percentages, and so forth, are to be understood as being modified in all instances by the term "about". Also, all ranges include the maximum and minimum points disclosed and include any intermediate ranges therein, which may or may not be specifically enumerated herein.

- FIG. 1 is a schematic illustration of a transport conditioning system according to an example,

- FIG. 2 is a block diagram of the transport conditioning system of FIG. 1 showing more details of the electric power distribution assembly and of the control system, and

- FIG. 3 is a high-level block diagram of a control system of the DC voltage output of the power distribution system, according to a preferred embodiment of the present invention.

## Detailed description

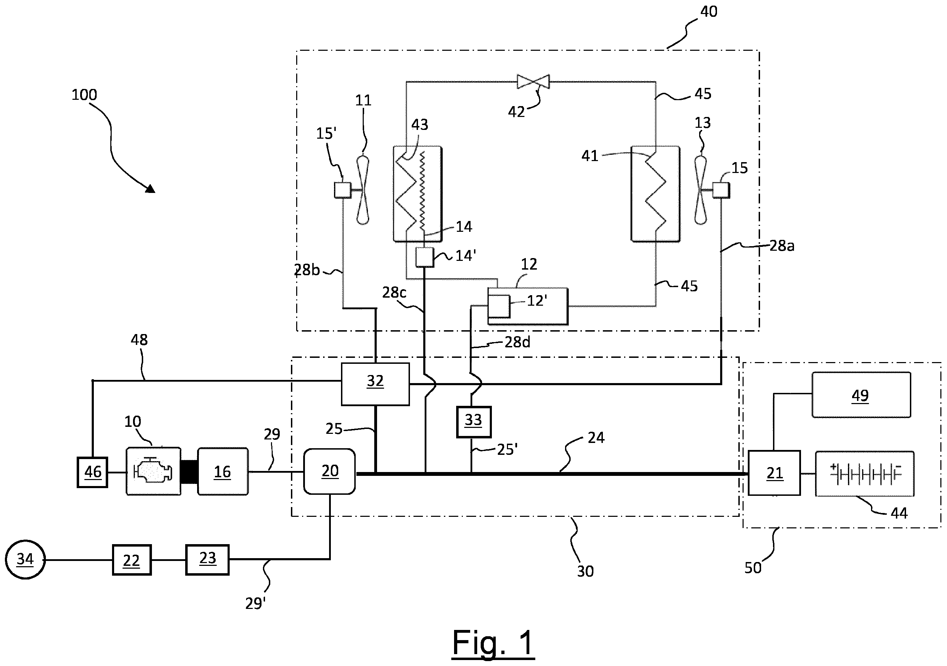

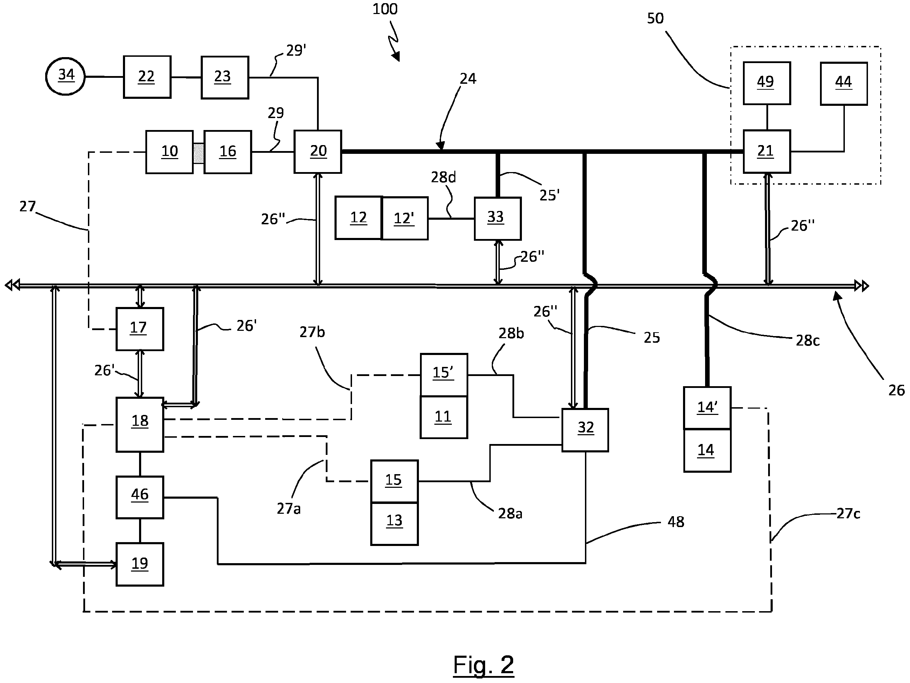

An transport conditioning system 100 according to a preferred embodiment of the present disclosure is illustrated in Figs. 1 and 2. Whereas Fig. 1 is a schematic illustration of the transport conditioning system 100 comprising the conditioning unit 40 (shown only in part and diagrammatically in Fig. 2) and the power distribution assembly 30 with indication of the power lines, Fig. 2 shows more details on the power control of the motor-driven components/devices of the transport conditioning system.

The transport conditioning system 100 comprises a transport conditioning unit 40 for providing temperature-controlled air and an electric power distribution assembly 30 for supplying power to the electrical components of the conditioning unit 40. The transport conditioning unit 40, of a conventional type, comprises a compressor 12 operated by an electric motor 12', referred to as the compressor motor, the compressor receiving a refrigerant fluid for increasing its pressure and temperature. The compressed refrigerant fluid flows through a condenser 41 that removes heat from the fluid, typically by air cooling. One or more condenser fans 13 are associated with the condenser 41, in particular directly facing the condenser 41, for air cooling of the refrigerant fluid passing through the condenser. The fluid than passes through an expansion valve 42 for lowering the pressure of the fluid and expanding the fluid in a gas (at least partially) and then through an evaporator 43 for absorbing heat from the fluid and transferring cooled air to the ambient. Transfer of air flow is enhanced by one or more evaporator fans 11 associated with the evaporator 43, in particular directly facing it. The condenser 41, the compressor 12, the expansion valve 42 and the evaporator 43 are fluidly connected via fluid lines 45 in a closed loop refrigerant circuit.

The compressor has a flow inlet, e.g. a suction port, and a flow outlet, e.g. a discharge port. The condenser 41, in particular the flow inlet thereof, is fluidly connected to the flow outlet of the compressor 12, whereas the evaporator 43, in particular the flow outlet thereof, is fluidly connected with the flow inlet of the compressor 12.

In an embodiment, the compressor 12 is a scroll compressor having an integral electric motor 12' placed inside the compressor body. Typically, the compressor motor 12' is an AC motor. Preferably, the compressor motor is a variable-speed motor, operating at a speed that is synchronous to the frequency of the power supply. For speed variation, a variable-frequency driving circuit (known per se) configured to output three-phase AC power at variable frequencies is used to operate the compressor motor.

The conditioning unit 40 may also comprise one or more electrical heaters 14 typically arranged in the proximity of the evaporator 43. The heaters 14 are provided with a heating regulator circuit 14' as driver for regulating the temperature of the heaters, for example by means of a PWM technique.

The one or more condenser fans 13 is driven by a respective motor 15, referred to as the first fan motor, typically integral with the fan. Preferably, the first fan motor is an electric motor equipped with an electronic driver for controlling its operation. The driver is configured to receive an external control signal via electric control line 27a from an electronic conditioning unit controller 18 to drive the first fan motor in accordance with the control signal.

More preferably, the first fan motor 15 is a brushless DC (DLDC) motor, for example a permanent magnet DLDC motor. In this embodiment and in a conventional manner, the driver is provided with an electronic integral inverter circuit with DC voltage input and AC voltage output and an electronic driving circuit for controlling the inverted AC signal and driving the fan motor 15 according to a standard electronic speed control, for example by means of a pulse width modulation (PWM) technique.

The one or more evaporator fans 11 are driven by a respective fan motor 15', typically integral with the fan and referred to as the second fan motor. Preferably, the fan motor 15' is an electric motor equipped with an electronic driver for controlling its operation. The electronic driver is configured to receive an external control signal via electric control line 27b, such as a pulse width modulation (PWM) signal, and to drive the fan motor in accordance with the control signal. More preferably, the fan motor 15' is a brushless DC motor, for example a permanent magnet DLDC motor.

For example, typical values of the DC voltage input for operation of the fan motors 15 and 15' are 24V or 110V.

The compressor 12, the condenser fan(s) 13 and the evaporator fan(s) 11 operate at the same time, while the electrical heaters 14 operate during heating or defrost mode.

Preferably, the transport conditioning system 100 is an onboard system.

The power supply of the transport conditioning system 100 comprises an electrical generator 16 driven by an internal combustion engine 10, typically a diesel engine. In particular, the electrical generator 16 can be driven by the engine drive shaft by direct mechanical coupling, by coupling through a transmission gear reducer or multiplier, or by a belt drive. In an embodiment, the transmission shaft of the internal combustion engine 10 is the drive shaft of the electrical generator 16, so as to avoid provision of further mechanical transmission means.

The internal combustion engine 10 can be either a dedicated engine for the powering of the transport conditioning unit 40, or the vehicle engine used for traction.

A starting battery 46, for example a 12V lead battery, is electrically connected to the internal combustion engine 10 for the switching on and off of the engine.

In a known manner, the engine 10 is provided with an engine intake throttle, for example a butterfly valve, for adjusting the intake fuel/air flow and a throttle position sensor for sensing in real time the throttle position (not shown in the figures). For operation of the intake throttle, an electric motor connected thereto is provided. The engine intake throttle can be a linear throttle. In a conventional manner, the intake throttle can be a DC motor driven control valve and the throttle positioning sensor can be a variable resistor.

The throttle positioning sensor is in communication with an electronic engine controller 17 via an electric control line 27. Electric control lines 27, 27a, 27b, 27c to/from electronic drivers for their actuation are represented in Fig. 2 with dashed lines.

The electronic engine controller 17 is apt to receive/transmits control signals and to be programmed for execution of closed/open loop speed controls and/or other electronic controls. To this end and in a conventional manner, the engine controller 17 comprises a microprocessor and an associated memory. The throttle sensor is configured to produce a sensing electric signal to be transmitted to the electronic engine controller 17. The electronic engine controller 17 is configured to receive the sensing electric signal indicative of an instantaneous throttle position value and to correlate that throttle position value to a value of running speed, typically represented by an RPM value, for example by using a lookup table stored in the memory of the engine controller 17, so as to determine the instantaneous engine running speed and produce an engine speed signal as an output control signal to be sent to the engine controller 17.

The electrical generator 16 is a synchronous generator having a power output connected to a power line 29 so as to supply AC power. In a preferred embodiment, the AC generator 16 is designed to output a three-phase voltage with variable frequency and amplitudes owed by the engine 10 running at different running speeds. The electrical power output from the generator can be varied from a minimum (voltage) amplitude level to a maximum amplitude level, corresponding, respectively, to a minimum RPM value to a maximum RPM value of the diesel engine 10. In a preferred embodiment, the electrical generator 16 is a permanent magnet synchronous generator. Preferably, the output voltage varies within the range from AC 280V and AC 550V.

The transport conditioning system 100 comprises a power distribution assembly 30 comprising an AC-DC voltage converter 20 electrically coupled as input to the AC generator 16. In particular, the AC-DC converter 20 is electrically connected as input to the output power line 29. The AC-DC voltage converter 20 comprises a rectifier circuit for converting the AC power into DC power. The AC-DC voltage converter 20 is designed to output a high DC voltage, preferably of from DC 400V to DC 800V, more preferably of from DC 500V to DC 700V. In a preferred embodiment, the DC voltage output is of 580V resulting from the rectification a standard three-phase 400V AC voltage.

The Applicant has noted that a high voltage provide flexibility in the power flow to the electrical loads.

Preferably, the AC-DC voltage converter 20 is designed to output a substantially constant DC voltage.

In a preferred embodiment, the AC-DC converter 20 is a three-phase full bridge converter. Preferably, the AC-DC converter operates as boost converter. In a preferred embodiment, the converter comprises an input three-phases diode bridge, a diode bridge rectifier circuit at the output and switching devices at the input bridge controlled through a duty cycle. The duty cycle that controls commutation of the switching devices is obtained by a control loop including two cascade loops: a current control loop cascaded to a voltage control loop. The control loop of the duty cycle adjusts the duty cycle in response to the input three-phase signal from the AC generator. Preferably, the duty cycle is of from 10% to 90%. An output one-level or two-level filter is preferably arranged to reduce the ripple in the output DC voltage.

In this embodiment, the AC generator 16 is designed to output a three-phase voltage output to be received by the three-phase diode bridge. The AC generator has three output AC terminals to be connected, respectively, to three input AC terminals of the AC-DC voltage converter, the input terminal being directly connected to the output power line 29 (in fact three power lines) of the AC generator 16.

Details are not shown in Fig. 2, which schematically represent power lines 29 and 24 as single lines with no representation of the input/output terminals.

The AC-DC voltage converter 20 has at least one DC power output terminal electrically connected to a DC power distribution bus 24. Preferably, the DC power distribution bus is directly connected to the at least one output DC terminal of the AC-DC voltage converter.

Preferably, the AC-DC converter 20 has two DC power output terminals, in particular a positive terminal and a negative terminal, connected to the DC distribution bus 24, which may be implemented with a 2-phase high-voltage busbar comprising two (positive and negative) conductors carrying a high DC voltage.

The electrical components of the conditioning unit 40, which need to be powered for operation and thus absorb power from the power distribution assembly 30, are collectively indicated as electrical loads. The transport conditioning unit 40 comprises a plurality of electrical loads. In the embodiment shown in the figures, the electrical loads comprise the compressor motor 12', the first fan motor 15, the second fan motor 15' and the electrical resistance heater 14.

According to a main feature of the present invention, a common DC distribution bus supplies DC power to at least one and preferably to a plurality of loads of the conditioning unit 40.

In a preferred embodiment, such as that shown in Figs. 1 and 2, each the plurality of loads is electrically coupled to the DC distribution bus 24, for example connected to the bus via supply power lines 25, 28, 25', 48, 28a, 28b, 28c, 28d. Preferably, the DC distribution bus 24 powers all the electrical loads of the transport conditioning unit 40. More preferably, the DC distribution bus 24 powers also the electronic control components such as the electronic controllers 17, 18 and the electric control lines for actuation of the loads and/or a CAN bus 26 for control communication signals from/to the controllers.

Preferably, the power distribution assembly 30 comprises only a single DC power distribution bus 24 electrically coupled to the AC-DC voltage converter 20.

Preferably, each electrical load is electrically coupled in parallel to the common DC power distribution bus 24 by means of supply power lines 25, 25', 28a-28d supplying said loads.

As most of the power consuming components of the conditioning unit 40 are commonly set to operate with low voltage (AC or DC) where necessary, an electrical load is connected to the DC distribution bus 24 through a voltage conversion device, in the description and claims generally indicated as load voltage conversion device, which takes the current running on high voltage in the DC distribution bus 24 as input and generates a suitable specific output AC or DC voltage required by the relevant electrical load.

With reference to the embodiment of the figures, first and second fan motors 15, 15' are electrically connected to the DC distribution bus 24 through a load voltage conversion device 32, which is a DC-DC voltage converter configured to convert the high voltage level conveyed by the bus 24 to a lower voltage level. The DC-DC voltage converter 32 is electrically coupled, preferably directly connected, to the DC distribution bus 24 via supply power line 25. The DC-DC voltage converter 32 comprises an input power terminal, which is a DC terminal, configured to receive high voltage, for example DC 600V, from the bus 24 and a plurality of output power terminals at lower voltage levels. Preferably, the load voltage converter 32 is a multi-output DC/DC converter with multiple output terminals, each output terminal supplying single-phase power at a voltage level to a respective electrical load. Output DC voltage levels can be different from one another. In ways per se known, the multi-output DC-DC voltage converter 32 comprises a plurality of DC-DC conversion modules in parallel. The load voltage converter 32 shown in the figures comprises three output DC terminals.

The output power terminals of the DC/DC voltage converter 32 are connected to the relevant loads through respective DC power lines. First and second fan motors 15, 15' are electrically coupled to the DC/DC voltage converter 32 via respective supply power lines 28a, 28b.

Preferably, the starting battery 46 for the internal combustion engine 10 is powered by the power distribution bus 24. As starting batteries for diesel engines commonly employed in transport refrigeration systems operate at low voltage, a power conversion of the input high voltage is typically needed. In Fig. 2, an output terminal of the multi-output DC/DC voltage converter 32 is connected to the starting battery 46 via supply power line 48.

For example, the multi-output DC/DC voltage converter 32 comprises an output power terminal at 24 DCV for powering the condenser fan(s) 13, an output power terminal at 110 DCV for powering the evaporator fan(s) 11 and an output power terminal at 12 DCV for the powering of the starting battery 46.

In the present embodiment, the electrical heater 14, typically a plurality of heaters, are DC resistance heaters accepting a pick-up voltage in a high-voltage range, e.g. DC 600 V, and therefore do not need power conversion of the bus voltage. Electrical heaters 14 are directly connected to the power distribution bus 24 via a supply power line 28c, in particular to the temperature regulating driver 14'.

In another embodiment, not shown in the figures, power conversion from the DC distribution bus 24 to the loads accepting a DC low voltage relative to the high voltage carried by the power distribution bus 24 is achieved by a respective DC-DC converter, each being electrically coupled as input to the power distribution bus 24 and as output to the relevant load, in particular fan motors 15, 15' and, optionally, to the starting battery 46.

In some embodiments, such as the preferred embodiment shown in Fig. 2, the compressor 12 is run by an AC compressor motor 12' driven by a compressor driver (not indicated in the figure), preferably a variable speed driver for adjusting the motor speed to the cooling demand. Preferably, the compressor motor 12' is a DLDC motor. A load power conversion device 33, which is a DC-AC power inverter, receives the high-voltage DC signal from the power distribution bus 24, and generates an AC power supply for the compressor motor. In particular, the DC-AC power inverter 33 is electrically coupled as input to the power distribution bus 24 and electrically coupled as output to the compressor motor 12'. In an embodiment, the DC-AC power inverter 33 is configured to convert the input high DC voltage to a three-phase voltage varying in amplitude or in frequency by the variable speed driver to control motor speed from 1200 RPM to 6000 RPM.

In ways per se known, the transport conditioning system 100 is provided with a temperature control system for controlling the temperature of the inner space of the cargo storage compartment by using a plurality of temperature and/or pressures sensors placed in the inner space and in communication with the electronic refrigeration controller 18. The refrigeration controller 18 is apt to receive/transmits control signals and to be programmed for execution of closed/open loop speed controls and/or other electronic controls. To this end and in a conventional manner, the refrigeration controller 18 comprises a microprocessor and an associated memory.

Bi-directional transmission of control signals to the electronic controllers 17 and 18 are on a controller area network (CAN bus) 26, which comprises CAN bus lines 26', 26" carrying communication signals and connecting the AC-DC voltage converter 20 to at least one electronic controller 17, 18 and connecting the controllers one to another. In particular, the CAN bus lines connect all load voltage conversion devices, to at least one controller.

The power supply assembly 30 consistent with the present disclosure allows employment of a plurality of different power sources. The internal combustion engine 10 and the electric generator 16 driven by the engine constitutes the primary power source for the electrical loads of the transport conditioning unit 40. Preferably, the AC-DC voltage converter 20 is electrically connectable to a utility power grid 34 as alternative electrical power source, for example during standstill of the vehicle. When the power is provided by the utility power grid 34, the internal combustion engine 10 and typically also the electric AC generator 16 are off. The AC-DC voltage converter 20 comprises, further to the input terminal(s) of the AC-DC converter electrically coupled to the AC generator 16, second input terminals (in particular three-phase AC input terminals) that can be connected to one end of an electrical cable 29' provided, at the opposite end, with an AC plug 22, connectable to the utility grid 34 via a socket. For example, the AC plug 22 is a AC 400V 50 Hz male plug. Once the AC-DC voltage converter 20 is connected to the utility grid 34, it supplies a high voltage DC power output to be distributed to the electrical loads by means of the DC power distribution bus 24. Preferably, the power supply assembly 30 further comprises an AC power filter 23, such as a passive power filter, for filtering high-order harmonics or other voltage distortions.

The transport conditioning system 100 preferably comprises a human machine interface (HMI) 19 logically connected, in particular via CAN bus 26, to the electronic equipment of the system. In an embodiment, the HMI provides a visual representation of the control system and of the operating parameters of the electrical loads and components, and allows real time data acquisition input by an operator, including on/off of the starting battery 46, which turns on the electronic equipment for the starting of the engine 10.

In some embodiments, the transport conditioning system 100 comprises a solar-powered battery assembly 50 providing temporary supplemental power to the electrical loads. For example, use of the battery assembly 50 can be desired when the engine 10 is a dedicated engine, often not compliant with the emission standards in urban areas, and it must be turned off. The solar-powered battery assembly 50 comprises a photovoltaic panel module 49, which typically generates a variable DC voltage output, which is dependent on several factors, chiefly the incident solar radiation. An output of the photovoltaic module 49 is connected to a standard battery pack 44, such as a Li-Ion battery, equipped with a battery charger, via a DC-DC voltage converter 21. An output of the DC-DC voltage converter 21 is connected to the DC power distribution bus 24. The DC-DC voltage converter 21 is designed to convert the DC voltage output from the photovoltaic power module 49 to a high DC voltage level within the range of values provided by the AC-DC voltage converter 20.

In another embodiment (not shown in the figures), a battery pack is directly connected to the DC power distribution bus 24 to be charged either from the utility power grid 34 or from the engine 10 driving the AC generator 16.

When the plurality of loads is powered by the battery pack 44, which has a relatively low DC output, for example DC 48V, the DC-DC voltage converter 21 transforms the output DC voltage from the battery pack into a high DC voltage, for example DC 600V. When the battery 44 is charged by another power source, such as the AC generator 16 or the utility grid 34, through the high voltage power distribution bus 24, the DC-DC converter 21 transforms the high DC voltage into a low DC voltage.

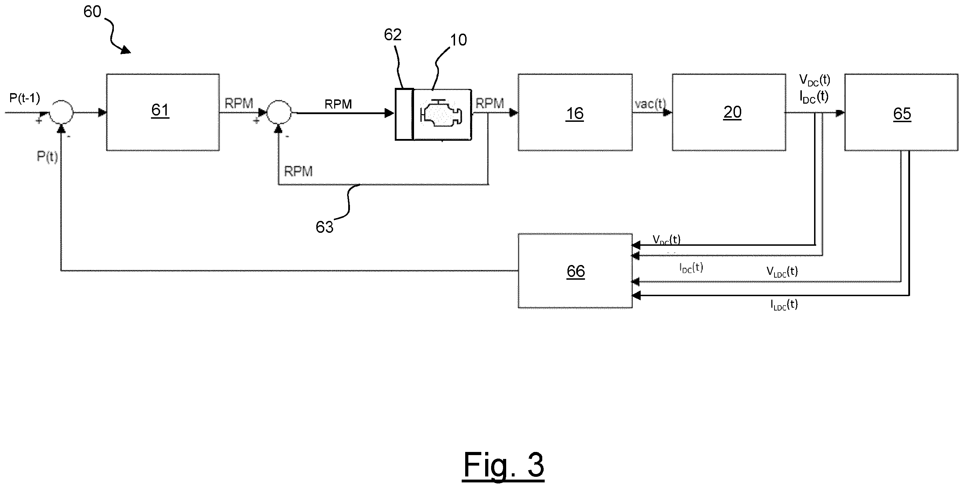

The Applicant has noted that, although the AC-DC converter is preferably designed to provide a substantially constant DC voltage output across a range of AC amplitude and frequency values, in some circumstances, for example due to an unbalance to power generated by the engine-driven generator and power requested by the loads, the pre-set midpoint voltage value may have the tendency to be unstable during operation. Preferably, a control system of the DC voltage output from the energy chain is implemented to ensure stable operation of the power distribution system within a controlled range of DC voltage values supplied to the DC power distribution bus. Figure 3 shows a high-level block diagram of a control system of the DC voltage output of the power distribution system, according to a preferred embodiment of the present invention. The control system 60 is adapted to execute the control of DC voltage output from the AC-DC converter 20 of the power distribution system 30 of the transport conditioning system 100 described with reference to Figs. 1 and 2. The control system is a closed loop control system.

More generally, the method is a computer-implemented method running on an electronic controller. In particular, the method is executed in a microprocessor of the controller while lookup tables and/or preset operating values are stored in a memory associated with the microprocessor. Preferably, the control algorithms implementing the method run on the electronic refrigeration controller 18. The CAN bus 26 provides for the bi-directional transmission of the control signals. For example, measured instantaneous voltage and current values, $V_{LDC}(t)$ and $I_{LDC}(t)$ are transmitted to the refrigeration controller 18 via the CAN bus 26.

An instantaneous DC output power conveyed at the output of the AC-DC converter 20 is determined based on an instantaneous DC voltage value $V_{DC}(t)$ measured at the output of the AC-DC converter 20 and on an instantaneous direct current $I_{DC}(t)$ measured at the output of the AC-DC converter, measured at the same time t. For example, $V_{DC}(t)$ and $I_{DC}(t)$ are separately and simultaneously measured by a volt meter and an ampere meter (not indicated in the figure), respectively, arranged at an output terminal of the AC-DC converter 20. At calculation block 66, the instantaneous power value, $P_{DC}(t)$ = $V_{DC}(t) \cdot I_{DC}(t)$, is computed.

The computed instantaneous power value P(t) is fed into a controller block 61, in particular a proportional-integral (PI) controller block, which takes the electric power $P_{DC}(t)$ as input to convert it into a engine horsepower value $P_m^t$ for the engine 10. In an embodiment, the conversion between electrical power and engine horsepower is computed by using a preset equation stored in the controller block 61. In particular, the horsepower is proportional to the electric power by means of a conversion factor determined by the energy conversion efficiency and characteristics of the electric chain for the DC voltage generation. The conversion factor, which can be empirically determined, can be a single scalar value for the operative range of electric powers $P_{DC}$ or a plurality of scalar values corresponding to different energy conversion efficiencies valid for different running speeds and/or emitted power.

In another embodiment, determining the $P_m^t$ value comprises performing a read of a lookup table describing a numerical relationship between engine horsepower of the engine and electrical DC power output from the AC-DC converter.

In an embodiment, the logic of the PI controller block 61 is included in the microprocessor of the engine controller 17 whereas equations, preset values, such as the energy conversion values, and lookup tables are stored in the memory associated with the microcontroller or data can be stored in the memory associated with the microprocessor of the refrigeration controller 18 logically connected with the engine controller 17.

At the controller block 61, a nominal running speed value corresponding to the horsepower value $P_m^t$ is determined based on an equation or a lookup table describing a numerical relationship between engine horsepower values and running speed values, which can be represented by a curve power [kW] vs. running speed [RPM]. The engine controller 17 then commands the engine 10 to run at the nominal RPM value and thus to drive the AC generator 16 accordingly.

The closed loop-control system recursively computes a nominal RPM value associated to an instantaneous DC power value $P_{DC}$ at times subsequent to the time t and feeds that value to the engine 10. According to the invention, a method is provided for controlling the DC voltage output from the power distribution system 30 for powering the plurality of electrical loads, the method comprising:

a) measuring an instantaneous DC voltage value $V_{DC}(t)$ and an instantaneous direct current $I_{DC}(t)$ at the output of the AC-DC converter 20;

b) computing a value of instantaneous DC power, $P_{DC}(t)$, based on the measured values $I_{DC}(t)$ and $V_{DC}(t)$;

c) determining an engine horsepower value $P_m{}^t$ associated with the instantaneous DC power by converting the instantaneous value $P_{DC}(t)$ into an engine horsepower value $P_m{}^t$ by means of a conversion factor associated with an energy conversion efficiency;

d) computing a nominal RPM value corresponding to the engine horsepower value $P_m{}^t$ based on an equation or on a lookup table describing a numerical relationship between engine horsepower values and the RPM values; and

e) running the engine at the nominal RPM value.

After step e), the method comprises repeating steps a) to e).

In another embodiment, step c) of determining the $P_m{}^t$ value comprises performing a read of a lookup table describing a numerical relationship between engine horsepower values and electrical DC power values associated with the AC-DC converter 20.

In ways per se known, the instantaneous DC voltage value $V_{DC}(t)$ and the instantaneous direct current value $I_{DC}(t)$ at the output of the AC-DC converter 20 can be carried out, respectively, by a volt meter and an ampere meter (not shown in the figures) electrically coupled to the output terminals of the AC-DC converter or to the DC power distribution bus 24, preferably upstream any connection point of the bus 24 with the supply power lines conveying power to the loads.

Preferably, before setting the diesel engine 10 to run at the nominal RPM value, the method comprises a secondary control loop, indicated with arrow 63 in Fig. 3, nested inside the primary control loop comprising steps a) to d), to determine an actual instantaneous engine speed, in particular the instantaneous RPM value at time t, RPM(t), simultaneously to the measurements $V_{DC}(t)$, $I_{DC}(t)$. In ways per se known, the instantaneous RPM value can measured by a RPM sensor (not indicated in the figure) designed for sensing the revolutions of the driving shaft of the engine.

Preferably, the instantaneous RPM value is determined by measuring the frequency and the voltage at the output of the AC generator 16. This can be advantageous in terms of reliability and costs.

Preferably, the method comprises:

- determining an actual instantaneous RPM value of the engine, wherein step d) comprises, after computing a nominal RPM value:
- comparing the instantaneous RPM value with the nominal RPM value,
- if a difference between the nominal RPM value and the instantaneous RPM value larger than a preset RPM difference value, adjusting the throttle position to the nominal RPM value so as to run the engine at that speed value, and

- if the difference between the nominal RPM value and the instantaneous RPM value is zero or within the preset RPM difference value, taking no action so as to maintain the running speed to the nominal RPM value.

The algorithm determines whether to take or not take action depending on the difference between the instantaneous RPM value and the nominal RPM value. For example, the preset RPM difference value can be a percentage difference of 1%.

Each electrical load of the plurality of electrical loads draws current from the DC bus resulting in electric power absorption. As power demand can change during operation of the conditioning unit, for example temperature pulldown vs. temperature maintenance, the current drawn from the DC bus by one or more loads, may change and this can result in a voltage drop in the DC bus or more generally in fluctuations of the DC voltage carried in the bus.

In some preferred embodiments, an instantaneous value of the power absorbed by the plurality of loads is determined simultaneously to the determination of the instantaneous power at the output of the AC-DC power converter 20, $P_{DC}(t)$. To this end and in ways per se known, the "local" instantaneous DC voltage and current, $V_{LDC}(t)$ and $I_{LDC}(t)$, of each load are measured, respectively, by a volt meter and an ampere meter (not indicated in the figures) electrically coupled to the relevant supply power line 25, 25', 28a-28d, connecting the load to the DC power distribution bus 24. In case a load voltage conversion device is arranged in the supply power line, the meters are placed in the portion of the supply line 25, 25' connecting the voltage conversion device to the DC bus 24. From the measurement of $V_{LDC}(t)$ and $I_{LDC}(t)$ for each load (block 65), an instantaneous load power value $P_L(t)$ is calculated. The sum of the plurality of load power values calculated for each load provides an estimate of the instantaneous electric power absorbed by the transport conditioning unit 40 and it is referred to as the instantaneous total absorbed power value, $P_{abs}(t)$. The $P_{abs}(t)$ value can be compared with the value $P_{DC}(t)$ to determine if there exists a significant discrepancy between the two values, indicative of power losses along the DC bus and/or unbalanced loads. This information can be displayed on the HMI 19 for a user to control the operation of the conditioning unit 40.

In an embodiment, the controller 18 is configured to receive a plurality of pair of instantaneous voltage and current values, $V_{LDC}(t)$ and $I_{LDC}(t)$, associated to each load of the plurality, to compute a corresponding instantaneous load power value $P_L(t)$. An instantaneous total absorbed power value, $P_{abs}(t)$, is computed as the sum of the plurality of instantaneous load power values,

$$P_L(t), P_{abs}(t) = \Sigma_1^n P_L(t)I$$ , with n the number of electric loads of the conditioning unit 40.

Preferably, the instantaneous current $I_{LDC}(t)$ is measured at the respective supply power line of each load. For example, the current is measured by means of a respective current meter connected in series to each load in a portion of the supply power line between the converter and the load, at the proximity of the DC bus.

The Applicant has observed that it would be advantageous to operate the engine so as to maintain fuel consumption and noise at the minimum level while satisfying the power demand of the electrical loads. The Applicant has observed that being the power distribution system able to accept a relatively wide range of input AC voltages and frequencies, it is possible to operate the engine across a range of running speeds and to select a suitable running speed providing the desired electric DC power at the output of the AC-DC converter 20 while keeping fuel consumption low. According to some preferred embodiments, the PI controller block 61 stores in a non-volatile memory a lookup table implementing a plurality of data tables (data table array), each data table mapping a numerical relationship between engine horsepower and running speed at a constant fuel consumption. Each data table stores a plurality of horsepower values, e.g. in kW, and a corresponding plurality of running speed values, e.g. in RPM, for a given fuel consumption value, expressed for example in g/kWh. Therefore, the data tables of the array implemented by the lookup table are each associated with a respective value of fuel consumption, the values of fuel consumption being different from one another.

In a two-dimensional graph horsepower-RPM, values forming each data table of the array of data tables can be represented by a respective curve associated with a value of fuel consumption. Data tables can be received and stored by the PI controller block 61 as input data information, for example originating from horsepower-RPM curves empirically determined.

Preferably, the method of controlling the DC voltage output from the power distribution system 30 comprises, preferably before step e):

- storing a lookup table implementing a plurality of data tables, each data table describing a numerical relationship between engine horsepower values and running speed values at a constant value of fuel consumption, each data table being associated with a value of fuel consumption so as a respective plurality of values of fuel consumption is associated with the plurality of data tables,

wherein step e) comprises computing a respective running speed value corresponding to the engine horsepower value $P_m{}^t$ from each data table of the lookup table and selecting a running speed value from the data table having the lowest value of fuel consumption of the plurality of fuel consumption values, the selected running speed value being the nominal running speed value.

Where applicable, method steps described herein may be embodied or executed as instructions stored on a non-transitory computer-readable memory medium or media, such as the memory of the electronic engine controller 17 and/or of the electronic refrigeration controller 18. Although, in the present description, reference may be made to a specific controller as embodying instructions for executing a control algorithm or part of it, it should be understood that the method steps can be implemented in any electronic controller of the transport or in a plurality of controllers being logically linked to one another.

Those skilled in the art will recognize that it is possible to combine the various features of the embodiments described above in order to obtain further embodiments, all of which are in any case encompassed by the present invention as defined by the following claims.

**Claims**

1.  A method for controlling the voltage output of a power distribution system for powering a plurality of electrical loads of a transport conditioning unit, the transport conditioning unit comprising an internal combustion engine, an electric AC generator (16) driven by the internal combustion engine, a compressor (12), a condenser (41), and a condenser fan (13) associated with the condenser (12) for providing air flow thereover, and a plurality of electrical loads (12', 15, 15', 14) comprising an electric compressor motor (12') for driving the compressor (12) and a first electric fan motor (15) for driving the condenser fan (13), and

    a power distribution system comprising an AC-DC voltage converter (20) electrically coupled as input to the AC generator (16) and as a output to a DC power distribution bus (24) configured to carry DC voltage, the DC power distribution bus being electrically coupled to at least one of the plurality of electrical loads, the method comprising:

    a) measuring an instantaneous DC voltage value, $V_{DC}(t)$, and an instantaneous direct current value, $I_{DC}(t)$, at the output of the AC-DC voltage converter (20);
    b) computing an instantaneous DC power value, $P_{DC}(t)$, based on the measured values $I_{DC}(t)$ and $V_{DC}(t)$;
    c) determining an engine horsepower value, $P_m{}^t$, of the internal combustion engine (10), the horsepower value, $P_m{}^t$, being associated with the instantaneous DC power value;
    d) computing a nominal running speed value of the internal combustion engine (10) corresponding to the engine horsepower value, $P_m{}^t$, based on an equation or on a lookup table describing a numerical relationship between engine horsepower values and running speed values associated with the internal combustion engine; and
e) running the engine at the nominal running speed value.

2. The method of claim 1, further comprising repeating steps a) to e).

3. The method of claims 1 or 2, comprising:

- storing a lookup table implementing a plurality of data tables, each data table describing a numerical relationship between engine horsepower values and running speed values at a constant value of fuel consumption, each data table being associated with a value of fuel consumption so as a respective plurality of values of fuel consumption is associated with the plurality of data tables,

wherein step e) comprises computing a respective running speed value corresponding to the engine horsepower value $P_m{}^t$ from each data table of the lookup table and selecting a running speed value from the data table having the lowest value of fuel consumption of the plurality of fuel consumption values, the selected running speed value being the nominal running speed value.

4. The method of any of claims 1 to 3, wherein the internal combustion engine (10) is provided with an engine intake throttle, the method comprising:

- determining an instantaneous running speed value of the engine,

wherein step e) comprises, after computing a nominal running speed value:

- comparing the instantaneous running speed value with the nominal running speed value,
- if a difference between the nominal running speed value and the instantaneous running speed value larger than a pre-set running speed difference value, adjusting the throttle position to the nominal running value so as to run the engine at that speed value, and
- if the difference between the nominal running speed value and the instantaneous running speed value is zero or within the pre-set running speed difference value, taking no action so as to maintain the running speed to the nominal running speed value.

5. The method according to claim 4, wherein the instantaneous running speed is determined from a measurement simultaneous to the measurements of $V_{DC}(t)$ and $I_{DC}(t)$.

**Patentansprüche**

1. Verfahren zum Steuern des Spannungsausgangs eines Stromverteilungssystems zum Versorgen einer Vielzahl von elektrischen Lasten einer Transportkonditionierungseinheit, wobei die Transportkonditionierungseinheit einen Verbrennungsmotor, einen von dem Verbrennungsmotor angetriebenen elektrischen Wechselstromgenerator (16), einen Kompressor (12) einen Kondensator (41) und ein mit dem Kondensator (12) verbundenes Kondensatorgebläse (13) um einen Luftstrom darüber bereitzustellen sowie eine Vielzahl elektrischer Lasten (12', 15, 15', 14) umfasst, die einen elektrischen Kompressormotor (12') zum Antreiben des Kompressors (12) und einen ersten elektrischen Gebläsemotor (15) zum Antreiben des Kondensatorgebläses (13) umfassen, und

ein Stromverteilungssystem, das einen Wechselstrom-Gleichstrom-Spannungswandler (20) umfasst, der elektrisch als Eingang mit dem Wechselstromgenerator (16) und als Ausgang mit einem Gleichstrom-Verteilungsbus (24) gekoppelt ist, der so konfiguriert ist, dass er Gleichspannung führt, wobei der Gleichstrom-Verteilungsbus elektrisch mit mindestens einer der mehreren elektrischen Lasten verbunden ist, wobei das Verfahren Folgendes umfasst:

a) Messung eines momentanen Gleichspannungswertes, $V_{DC}(t)$, und eines momentanen Gleichstromwertes $I_{DC}(t)$, am Ausgang des AC-DC Spannungswandlers (20);
b) Berechnung eines Momentanwertes der Gleichstromleistung, $P_{DC}(t)$, auf der Grundlage der gemessenen Werte $I_{DC}(t)$ und $V_{DC}(t)$;
c) Bestimmen eines Motorleistungswertes $P_m{}^t$, des Verbrennungsmotors (10), wobei der Leistungswert $P_m{}^t$, mit dem momentanen Gleichstromleistungswert verbunden ist;
d) Berechnen eines Nenndrehzahlwertes des Verbrennungsmotors (10), der dem Motorleistungswert $P_m{}^t$, entspricht, auf der Grundlage einer Gleichung oder einer Nachschlagetabelle, die eine numerische Beziehung zwischen Motorleistungswerten und dem Verbrennungsmotor zugeordneten Drehzahlwerten beschreibt; und
e) Betrieb des Motors mit der Nenndrehzahl.

**2.** Verfahren nach Anspruch 1 ferner umfassend die Wiederholung der Schritte a) bis e).

**3.** Verfahren nach Anspruch 1 oder 2, ferner Folgendes umfassend:

- Speichern einer Nachschlagetabelle, die eine Vielzahl von Datentabellen implementiert, wobei jede Datentabelle eine numerische Beziehung zwischen Motorleistungswerten und Laufgeschwindigkeitswerten bei einem konstanten Wert des Kraftstoffverbrauchs beschreibt, wobei jede Datentabelle mit einem Wert des Kraftstoffverbrauchs verbunden ist, so dass eine entsprechende Vielzahl von Werten des Kraftstoffverbrauchs mit der Vielzahl von Datentabellen verbunden ist,

wobei Schritt e) das Berechnen eines jeweiligen Laufgeschwindigkeitswertes, der dem Motorleistungswert $P_m{}^t$ entspricht, aus jeder Datentabelle der Nachschlagetabelle und das Auswählen eines Laufgeschwindigkeitswertes aus der Datentabelle mit dem niedrigsten Wert des Kraftstoffverbrauchs aus der Vielzahl der Kraftstoffverbrauchswerte umfasst, wobei der ausgewählte Laufgeschwindigkeitswert der Nennlaufgeschwindigkeitswert ist.

**4.** Verfahren nach einem der Ansprüche 1 bis 3, wobei der Verbrennungsmotor (10) mit einer Motoreinlassdrossel versehen ist, wobei das Verfahren umfasst:

- Bestimmen eines Momentanwertes für die Betriebsgeschwindigkeit des Motors,

wobei Schritt e) nach der Berechnung eines Nennwertes für die Laufgeschwindigkeit Folgendes umfasst:

- Vergleichen des Momentanwertes der Fahrgeschwindigkeit mit dem Nennwert der Fahrgeschwindigkeit,
- wenn eine Differenz zwischen dem Nennbetriebsdrehzahlwert und dem Momentanbetriebsdrehzahlwert größer als ein voreingestellter Betriebsdrehzahldifferenzwert ist, Einstellen der Drosselklappenstellung auf den Nennbetriebswert, um den Motor mit diesem Drehzahlwert zu betreiben, und
- wenn die Differenz zwischen dem Nennwert der Laufgeschwindigkeit und dem Momentanwert der Laufgeschwindigkeit gleich Null ist oder innerhalb des voreingestellten Wertes für die Laufgeschwindigkeitsdifferenz liegt, keine Maßnahmen zu ergreifen, um die Laufgeschwindigkeit auf dem Nennwert der Laufgeschwindigkeit zu halten.

**5.** Verfahren nach Anspruch 4, wobei die momentane Laufgeschwindigkeit aus einer Messung bestimmt wird, die gleichzeitig mit den Messungen von $V_{DC}(t)$ und $I_{DC}(t)$ erfolgt.

**Revendications**

**1.** Procédé pour la régulation de la sortie de tension d'un système de distribution de puissance pour l'alimentation en puissance d'une pluralité de charges électriques d'une unité de conditionnement de transport, l'unité de conditionnement de transport comprenant un moteur à combustion interne, un générateur électrique de courant alternatif, CA (16) entraîné par le moteur à combustion interne, un compresseur (12), un condenseur (41), et une soufflante de condenseur (13) associée au condenseur (12) pour la fourniture d'un courant d'air sur celui-ci, et une pluralité de charges électriques (12', 15, 15', 14) comprenant un moteur électrique de compresseur (12') pour l'entraînement du compresseur (12) et un premier moteur électrique de soufflante (15) pour l'entraînement de la soufflante de condenseur (13), et

un système de distribution de puissance comprenant un convertisseur de tension courant alternatif-courant continu, CA-CC (20) électriquement couplé comme entrée au générateur de CA (16) et comme une sortie à un bus de distribution de puissance en CC (24) configuré pour porter une tension en CC, le bus de distribution de puissance en CC étant électriquement couplé à au moins l'une de la pluralité de charges électriques, le procédé comprenant :

a) la mesure d'une valeur instantanée de tension en CC, $V_{DC}(t)$, et une valeur instantanée de courant continu, $I_{DC}(t)$, à la sortie du convertisseur de tension CA-CC (20) ;
b) le calcul d'une valeur instantanée de puissance en CC, $P_{DC}(t)$, sur la base des valeurs $I_{DC}(t)$ et $V_{DC}(t)$ mesurées ;
c) la détermination d'une valeur de chevaux moteur, $P_m{}^t$, du moteur à combustion interne (10), la valeur de chevaux moteur, $P_m{}^t$, étant associée à la valeur instantanée de puissance en CC ;
d) le calcul d'une valeur de vitesse de fonctionnement nominale du moteur à combustion interne (10) correspondant à la valeur de chevaux moteur, $P_m{}^t$, sur la base d'une équation ou d'une table de consultation décrivant une relation numérique entre des valeurs de chevaux moteur et des valeurs de vitesse de fonctionnement associées au moteur à combustion interne ; et
e) la mise en fonctionnement du moteur à la valeur de vitesse de fonctionnement nominale.

2. Procédé selon la revendication 1, comprenant en outre la répétition des étapes a) à e).

3. Procédé selon les revendications 1 ou 2, comprenant :

- le stockage d'une table de consultation mettant en oeuvre une pluralité de tables de données, chaque table de données décrivant une relation numérique entre des valeurs de chevaux moteur et des valeurs de vitesse de fonctionnement à une valeur constante de consommation de carburant, chaque table de données étant associée à une valeur de consommation de carburant de sorte qu'une pluralité respective de valeurs de consommation de carburant soit associée à la pluralité de tables de données,

dans lequel l'étape e) comprend le calcul d'une valeur de vitesse de fonctionnement respective correspondant à la valeur de chevaux moteur $P_m^t$ provenant de chaque table de données de la table de consultation et la sélection d'une valeur de vitesse de fonctionnement provenant de la table de données ayant la plus faible valeur de consommation de carburant parmi la pluralité de valeurs de consommation de carburant, la valeur de vitesse de fonctionnement sélectionnée étant la valeur de vitesse de fonctionnement nominale.

4. Procédé selon l'une quelconque des revendications 1 à 3, dans lequel le moteur à combustion interne (10) est muni d'un papillon d'admission de moteur, le procédé comprenant :

- la détermination d'une valeur de vitesse de fonctionnement instantanée du moteur,

dans lequel l'étape e) comprend, après le calcul d'une valeur de vitesse de fonctionnement nominale :

- la comparaison de la valeur de vitesse de fonctionnement instantanée avec la valeur de vitesse de fonctionnement nominale,
- si une différence entre la valeur de vitesse de fonctionnement nominale et la valeur de vitesse de fonctionnement instantanée est supérieure à une valeur de différence de vitesse de fonctionnement prédéfinie, le réglage de la position de papillon sur la valeur de fonctionnement nominale de façon à faire fonctionner le moteur à cette valeur de vitesse, et

- si la différence entre la valeur de vitesse de fonctionnement nominale et la valeur de vitesse de fonctionnement instantanée est nulle ou dans les limites de la valeur de différence de vitesse de fonctionnement prédéfinie, la réalisation d'aucune action de façon à maintenir la vitesse de fonctionnement à la valeur de vitesse de fonctionnement nominale.

5. Procédé selon la revendication 4, dans lequel la vitesse de fonctionnement instantanée est déterminée à partir d'une mesure simultanée aux mesures de $V_{DC}(t)$ et $I_{DC}(t)$.

Fig. 1

Fig. 2

EP 3 626 488 B1

17

Fig. 3

**EP 3 626 488 B1**

**REFERENCES CITED IN THE DESCRIPTION**

**Patent documents cited in the description**

- US 20140026599 A
- US 20160311294 A
- EP 1046543 A2
- US 5629568 A
- EP 1046543 A